# DEMANDE DE BREVET EUROPEEN

(11) **EP 0 913 346 A1**
(43) Date de publication de la demande: **06.05.1999**
(21) Numéro de dépôt: 98460045.2
(22) Date de dépôt: 21.10.1998
(51) Int. Cl.: B65G 21/06, B65G 15/42

(54) **Convoyeur à bande transporteuse et bande transporteuse correspondante**

(30) Priorité: 21.10.1997 FR 9713412
(71) Demandeur: BMTS, 44360 Vigneux de Bretagne (FR)
(72) Inventeur: Boursier, Marcel, 44310 Saint-Colomban (FR)
(74) Mandataire: Vidon, Patrice

(57) **Abrégé**

L'invention concerne un dispositif convoyeur à bande transporteuse, ledit dispositif présentant une structure porteuse sur laquelle repose au moins une sole de glissement accueillant au moins une bande transporteuse (3), ladite bande transporteuse coopérant avec au moins deux tambours permettant sa mise en mouvement sur ladite sole, caractérisé en ce que ladite sole de glissement est constituée d'au moins deux longerons écartés d'un espace l'un de l'autre, lesdits tamboursprésentant au moins une section formant pignon denté (14) et ladite bande transporteuse (3) présentant au moins un profil intérieur denté (15) de largeur inférieure audit espaceséparant lesdits longerons (5), ledit profilé intérieur denté (15) étant conçu pour coopérer avec ladite section formant pignon denté (14) dudit tambour.

## Description

L'invention concerne le domaine de la conception et de la réalisation des convoyeurs à bande transporteuse. Ce type d'appareillage est utilisé pour déplacer des produits le long d'une ligne de fabrication et trouve notamment, mais non exclusivement, son application dans le domaine des industries agro-alimentaires.

De tels convoyeurs à bande transporteuse présentent classiquement une structure porteuse sur laquelle repose au moins une sole de glissement sur laquelle transite la bande transporteuse. Le mouvement de la bande transporteuse est généralement inculqué par au moins deux tambours fixés aux extrémités du dispositif, l'un des tambour formant un tambour d'entraînement et étant actionné par un moteur l'autre tambour formant un tambour entraîné ou tambour de renvoi.

Les bandes transporteuses mises en oeuvre dans de tels convoyeurs sont généralement constitués par une bande souple en matière plastique lisse tendue entre les deux tambours cités ci-dessus.

La demande de brevet français FR 2 663 309 décrit notamment un convoyeur à bande transporteuse selon cet état de la technique. L'un des inconvénients posés par les convoyeurs à bande transporteuse réside dans le fait que lesdites bandes peuvent se détendre, notamment sous l'effet du poids des produits transportés et patiner sur les tambours d'entraînement et de renvoi. La vitesse de convoyage se trouve ainsi alors désynchronisée par rapport à la vitesse d'entraînement inculquée par le tambour d'entraînement.

Afin de résoudre ce problème, il a été proposé dans l'état de la technique d'utiliser des moyens pour régler la tension de la bande transporteuse. De tels moyens sont notamment décrits dans la demande de brevet française FR 2 663 309 citée ci-dessus mais également dans le brevet européen EP 0 312 643. De tels dispositifs de mise en tension de la bande transporteuse présentent toutefois l'inconvénient d'être relativement complexes à réaliser.

Un des objectifs de la présente invention est notamment de proposer un convoyeur à bande transporteuse présentant des caractéristiques techniques permettant d'éviter une désynchronisation entre la vitesse de défilement de la bande transporteuse et la vitesse inculquée à celle-ci par le tambour d'entraînement.

Par ailleurs, les convoyeurs à bande transporteuse sont, comme déjà mentionné ci-dessus, très fréquemment utilisés dans le domaine agro-alimentaire. A ce titre, il doivent impérativement faire l'objet de nettoyages fréquents afin de diminuer au maximum les risques de contamination, notamment bactérienne, des produits transportés. Les convoyeurs à bande transporteuse de l'état de la technique présentent toutefois généralement des caractéristiques structurelles rendant difficiles un tel entretien. Ainsi, la sole de glissement de la bande transporteuse se présente généralement sous la forme d'un caisson fermé ou semi-fermé dont l'intérieur peut difficilement être nettoyé.

On notera également que les dispositifs connu de l'art antérieur présentent une sole de glissement constituée par une surface essentiellement continue et plane. Une telle structure présente un double inconvénient.

En premier lieu, une telle structure implique la nécessité de démonter la bande transporteuse pour nettoyer la sole si des impuretés ou débris quelconques se retrouvent coincés entre ladite sole et la bande convoyeuse. A ce sujet, on notera que pour faciliter le démontage de cette bande transporteuse il est classique de pourvoir de tels convoyeurs d'un ou plusieurs pieds prévus sur un seul côté de façon à autoriser le retrait de la bande de l'autre côté du convoyeur.

En second lieu, la nature plane et lisse des soles de glissement favorise la création d'un effet de ventouse entre cette sole et la bande transporteuse, effet qui peut conduire à un dysfonctionnement du système.

Un autre objectif de la présente invention est donc de proposer un convoyeur à bande transporteuse présentant des caractéristiques techniques permettant de faciliter les opérations de nettoyage des ses différents éléments structurels et donc de renforcer les conditions d'hygiène liées à son utilisation.

Egalement un objectif de la présente invention est de décrire des caractéristiques techniques qui permettent de réduire, voire de supprimer, tout effet de ventouse entre la bande transporteuse et la sole de glissement.

Encore un autre problème posé par les convoyeurs à bande transporteuse de l'état de la technique résulte de la structure de leurs tambours d'entraînement et de renvoi de la bande transporteuse. Ceux-ci présentent en effet généralement une structure cylindrique à surface lisse. Une telle structure défavorise l'évacuation des éventuels débris qui peuvent se glisser entre ces tambours et la bande convoyeuse.

Encore un autre objectif de la présente invention est donc de fournir des caractéristiques techniques de tambour permettant de diminuer les risques de blocage d'impuretés entre les tambours et la bande transporteuse et permettant également de faciliter l'entretien de ces tambours.

Comme mentionné ci-dessus, les dispositifs de convoyage à bande transporteuse sont utilisés dans de nombreux domaines pour des applications très variées. Afin de permettre leur adaptation à différentes tailles de bandes transporteuses, il a été proposé dans l'état de la technique de nombreuses solutions visant à réaliser des soles de glissement modulables en longueur et également en largeur.

Ainsi, le brevet européen EP 540 769 propose de réaliser la sole de glissement par association d'éléments modulaires longitudinaux pourvus de moyens d'encliquetage permettant de réaliser des soles de glissement de largeurs variables. On peut également citer à ce sujet le brevet américain US-A-5,137,145. Ces techniques de l'art antérieur présentent l'inconvénient d'impliquer la réalisation d'éléments modulaires de structure complexe permettant à ceux-ci de s'encliqueter les uns dans les autres pour constituer la sole de glissement. Il en résulte un coût de réalisation important.

Encore un autre objectif de la présente invention est donc de proposer un convoyeur pour bande transporteuse présentant une structure lui permettant d'être facilement adapté à différentes largeurs et longueur de bandes convoyeuses.

Enfin, également un objectif de l'invention est de proposer un nouveau type de bande transporteuse ne présentant pas les inconvénients de l'état de la technique.

Ces différents objectifs, ainsi que d'autres qui apparaîtront par la suite sont atteints grâce à l'invention qui concerne un dispositif convoyeur à bande transporteuse, ledit dispositif présentant une structure porteuse sur laquelle repose au moins une sole de glissement accueillant au moins une bande transporteuse, ladite bande transporteuse coopérant avec au moins deux tambours permettant sa mise en mouvement sur ladite sole, caractérisé en ce que ladite sole de glissement est constituée d'au moins deux longerons de section essentiellement carrée ou rectangulaire disposés parallèlement à l'axe longitudinal dudit dispositif, lesdits longerons étant montés écartés d'un espace (d) l'un de l'autre et coopérant avec des moyens de fixation à la structure porteuse, lesdits longerons et au moins certains desdits moyens de fixation étant prévus démontables et interchangeables de façon notamment à pouvoir modifier ledit espace (d) entre lesdits longerons, lesdits tambours présentant au moins une section formant pignon denté et ladite bande transporteuse présentant au moins un profil intérieur denté de largeur inférieure audit espace (d) séparant lesdits longerons, ledit profilé intérieur denté étant conçu pour coopérer avec ladite section formant pignon denté dudit tambour.

La présente invention propose donc de réaliser une sole de glissement constituée de deux ou plusieurs longerons entre lesquels est prévu un espace (d). On comprendra que, lorsque la sole en question comprendra plus de deux longerons cet espace (d) entre un longeron et un autre pourra varier. On comprendra également que les longerons pourront être reliés entre eux par exemple par une structure commune à leur base. Une telle structure présente l'avantage de fournir une sole de glissement présentant une surface de contact réduite avec la bande transporteuse ce qui permet :
- de réduire considérablement l'effet de ventouse entre la sole de glissement et la bande transporteuse ;
- de diminuer les risques d'introduction de débris ou d'impuretés diverses entre la sole de glissement et la bande transporteuse ;
- de réduire considérablement le bruit généré par la bande transporteuse sur le convoyeur ;
- de faciliter considérablement le nettoyage de la sole.

L'invention permet de plus de supprimer les risques de désynchronisation entre la vitesse inculquée par le tambour d'entraînement et la vitesse de la bande transporteuse, le profil intérieur denté de celle-ci s'engrenant dans la section formant pignon desdits tambours. Selon l'invention le profil intérieur denté de la bande transporteuse s'insère dans l'espace (d) séparant les longerons de façon telle que la bande transporteuse soit bien en contact avec la surface supérieure des longerons. Selon de telles caractéristiques, l'entraînement de la bande se fait grâce à des moyens purement mécaniques qui présentent l'avantage de pouvoir s'affranchir de tout système électrique ou électronique de contrôle de défilement de celle-ci sur le convoyeur.

Selon une autre caractéristique essentielle de l'invention, les longerons espacés constituant la sole de glissement, ainsi qu'au moins certains des moyens de fixation de ces longerons sur la structure porteuse sont facilement démontables. Il est ainsi possible de changer aisément les longerons constituant la sole et ainsi de modifier la largeur de celle-ci.

On notera, qu'il était connu dans l'état de la technique de réaliser une sole de glissement sous forme de deux éléments longitudinaux présentant une section transversale en L, chaque élément longitudinal coopérant avec un bord de la structure. Une telle technique est décrite dans la demande de brevet française FR 2 476 042. Toutefois, la solution technique présentée dans ce document ne permet aucunement de faire varier la largeur de la sole en interchangeant lesdits éléments longitudinaux puisque la largeur de cette sole est liée à la largeur de la structure porteuse.

Selon une variante préférentielle de l'invention, ladite structure porteuse inclut au moins deux pieds, chacun desdits pieds présentant au moins un montant et au moins une traverse, lesdits longerons coopérant avec lesdites traverses.

Une telle caractéristique permet d'alléger la structure porteuse et ainsi de faciliter l'entretien du dispositif. Comme il est connu de l'état de la technique, chacun des pieds sera préférentiellement pourvu d'un seul montant monté en porte-à-faux d'un seul côté du convoyeur, de façon à faciliter le retrait de la bande transporteuse.

Selon une caractéristique intéressante de l'invention, lesdites traverses desdits pieds sont montés réglables en hauteur et/ou en inclinaison sur lesdits montants desdits pieds. On pourra envisager différentes solutions techniques pour réaliser un tel montage réglable des traverses sur les montants des pieds. Une telle caractéristique permet de faire varier la hauteur de la bande transporteuse et/ou d'incliner celle-ci, en fonction des besoins.

On comprendra que l'on pourra réaliser les moyens de fixation des longerons sur les traverses de différentes manières sans sortir du cadre de la présente invention. Toutefois, la Demanderesse propose un mode de réalisation particulièrement avantageux de ces moyens de fixation. Selon cette variante, lesdits moyens de fixation des longerons auxdites traverses incluent, pour chaque traverse, deux éléments de blocage latéral et au moins un élément de blocage central desdits longerons, lesdits éléments de blocage latéral et de blocage central permettant de bloquer lesdits longerons en position et de définir ledit espace (d) entre ceux-ci.

Selon un tel mode de réalisation, les longerons sont maintenus en position par blocage latéral.

Préférentiellement, l'un desdits éléments de blocage latéral est intégré à ladite traverse et les autres éléments de blocage sont démontables.

Egalement préférentiellement, lesdits longerons sont constitués par des profilés présentant des faces latérales pourvues de moyens de coopération avec lesdits éléments de blocage.

Avantageusement, ces moyens de coopération sont constitués par des gorges longitudinales prévues sur les faces latérales desdits longerons.

Selon une autre caractéristique préférentielle intéressante de l'invention, le dispositif comprend des moyens de support desdits tambours directement fixés aux extrémités desdits longerons.

Dans le but d'alléger la structure, afin de faciliter encore les opérations d'entretien, ces moyens de support pourront être réalisés de façon simple par exemple sous la forme d'une plaque de section transversale en U.

Encore selon un autre aspect avantageux de l'invention, lesdits tambours sont constitués par une pluralité de disques montés parallèles entre eux et espacés les uns des autres sur un axe de rotation.

L'invention propose donc, de façon originale, de réaliser les tambours non plus sous la forme de cylindres présentant une surface essentiellement continue mais sous la forme d'une association de disques prévus parallèles entre eux et entre lesquels sont ménagés des espacements. Une telle conception permet de réduire la surface entre les tambours et la bande transporteuse et ainsi de diminuer les risques de glissement d'impuretés ou de débris d'impuretés entre ces tambours et la bande transporteuse. Une telle structure permet également de faciliter les opérations d'entretien. On notera qu'avantageusement, les disques constituant les tambours pourront être facilement désolidarisés de l'axe de rotation et constitueront de ce fait autant d'éléments modulaires permettant la réalisation de tambours de longueurs variables.

Selon une autre variante intéressante de l'invention, ladite bande transporteuse est en matière plastique et est constituée d'au moins deux parties dont l'une forme ledit profil intérieur denté et dont l'autre forme la partie en contact avec lesdits longerons (sur sa face inférieure) et le produit à transporter (sur sa face supérieure). Ces deux parties sont réalisées en matière plastique, par exemple, mais non exclusivement, du polyuréthane, et sont soient collées l'une à l'autre, soit réalisées en une seule pièce, par exemple par moulage.

D'une façon préférentielle la partie formant le profil intérieur denté, formant organe de traction, est prévue sur l'axe central longitudinal de la partie en contact avec les longerons et les produits à transporter et présente une largeur inférieure à celle-ci. Une telle caractéristique permet d'obtenir une bande transporteuse présentant des bords longitudinaux souples autorisant une mise en auge aisée et rapide. Une telle mise en auge de la bande transporteuse est nécessaire pour le transport de certains produits (par exemple ceux pouvant rouler, pour les retenir). La structure classique des bandes transporteuses de l'état de l'art ne permet pas une mise en auge rapide et nécessite l'utilisation sur le convoyeur de bords de contenance pour aboutir à un tel résultat. Grâce à l'invention, il est possible de mettre en auge la bande sur une distance de convoyeur très courte (et donc dans un temps très court), par exemple en prévoyant sur celui-ci de simples glissières latérales permettant de relever les bords souples de cette bande.

Egalement préférentiellement, des cordes longitudinales de renfort sont prévues au niveau de la fibre neutre de ladite partie. La fibre neutre d'une bande de matériau correspondant à la fibre de cette bande qui ne subit pas de contrainte lors d'une déformation de cette bande. Pour une bande en matériau uniforme la fibre neutre se situe au milieu de celui-ci. Dans la bande transporteuse selon l'invention, les cordes en question peuvent être, par exemple mais non exclusivement, réalisées en Kevlar (marque déposée). Leur nombre peut être variable.

De façon également préférentielle, la bande transporteuse peut présenter une face supérieure pouvue d'un relief ou sur laquelle on aura fixé des éléments entraîneurs permettant de bien maintenir en position le produit transporté.

La face inférieure de la bande transporteuse, et plus précisément de la partie destinée à être en contact avec les longerons, pourra également être pourvue d'un relief pour éviter tout effet ventouse avec le convoyeur.

L'invention, ainsi que les différents avantages qu'elle présente seront plus facilement compris, grâce à la description qui va suivre d'un mode non limitatif de réalisation de celle-ci en référence aux dessins, dans lesquels :
- la figure 1 représente un dispositif convoyeur pour bande transporteuse selon la présente invention, sur laquelle pour des besoins de clarté de la description la bande transporteuse n'est pas représentée ;
- la figure 2 représente une vue de côté d'un des pieds constituant la structure porteuse du dispositif montré à la figure 1 ;
- la figure 3 représente une vue en coupe transversale de la sole de glissement et d'une partie de la structure porteuse du dispositif représenté à la figure 1 ;
- la figure 4 représente une vue en perspective d'un mode de réalisation des tambours d'un dispositif selon l'invention du type de celui montré à la figure 1 et de la bande transporteuse associée à ce dispositif ;
- la figure 5 représente une vue en coupe transversale de la bande transporteuse ;
- la figure 5a représente une vue en coupe longitudinale de la bande transporteuse ;
- la figure 6 représente une vue en perspective des moyens de réglage en hauteur et en inclinaison des traverses du dispositif montré à la figure 1 ;
- la figure 7 représente un détail des moyens de réglage montrés à la figure 6.

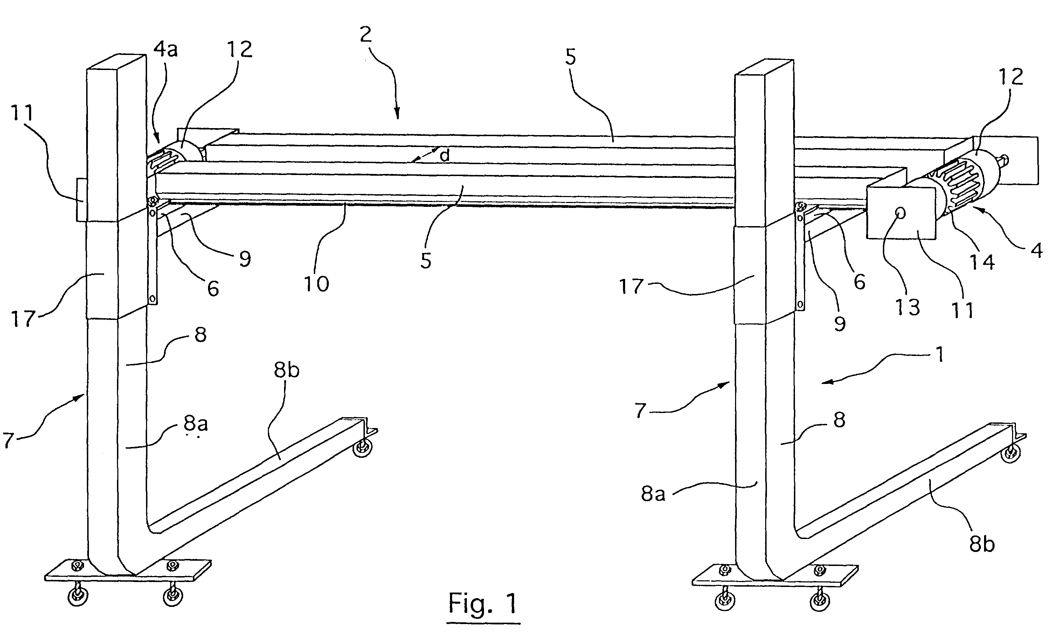

En référence à la figure 1, un dispositif convoyeur à bande transporteuse est représenté en perspective. Ce dispositif est essentiellement constitué par une structure porteuse 1 sur laquelle repose une sole de glissement 2 destinée à accueillir une bande transporteuse, non représentée sur la figure 1 pour des besoins de clarté de la description. Le dispositif représenté est pourvu de deux tambours 4, 4a prévus à chaque extrémité de la sole de glissement 2 et conçus pour entraîner la bande transporteuse. L'un de ces tambours 4 est entraîné en rotation par un moteur (non représenté) et constitue ainsi un tambour d'entraînement tandis que l'autre de ces tambours 4a constitue un tambour de renvoi.

Ces tambours sont solidarisés à la sole 2 par l'intermédiaire de plaques d'extrémité 11 présentant une section en U (avec un retrait pour laisser passer la partie denté de la bande transporteuse).

Conformément à la présente invention, la sole de glissement 2 est constituée par deux longerons 5 de section transversale essentiellement carrée montés sur la structure porteuse 1 de façon à ménager entre ceux-ci un espace (d).

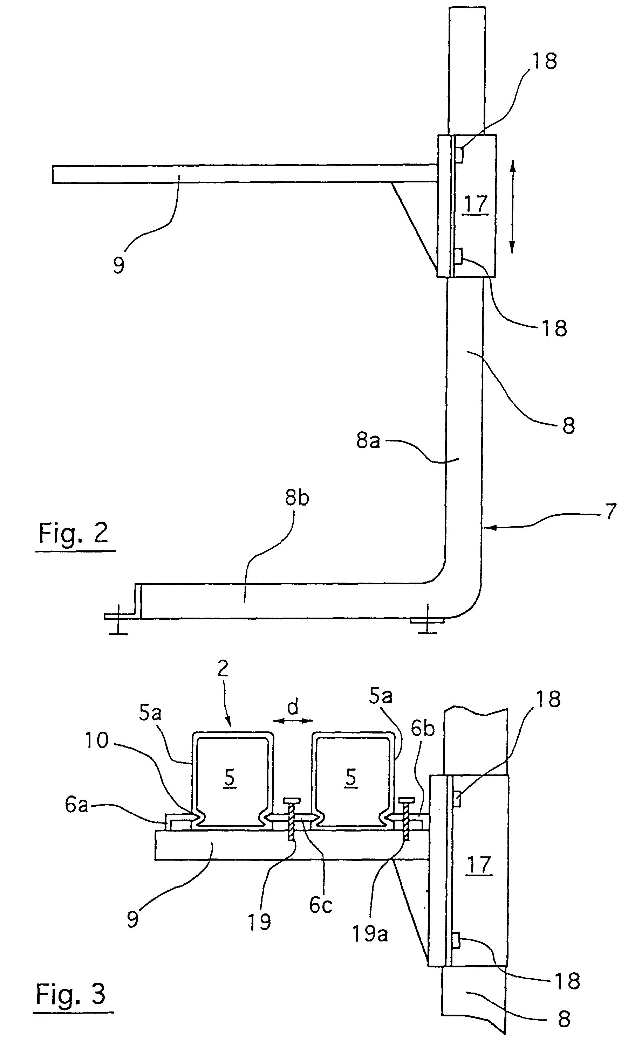

La structure porteuse 1 est constituée par deux pieds 7 présentant chacun, comme on peut le voir également sur la figure 2, un montant 8 et une traverse 9. Chaque montant 8 présente une partie verticale 8a et une partie horizontale 8b. Les pieds 7 sont prévus d'un seul côté du dispositif pour faciliter le retrait de la bande convoyeuse de l'autre côté de celui-ci.

Bien que le mode de réalisation ici représenté n'inclut que deux pieds 7, on comprendra aisément qu'il pourra être prévu un nombre plus important de pieds en fonction de la longueur que l'on souhaitera conférer à la sole de glissement. La distance séparant les pieds l'un de l'autre sera définie par l'homme de l'art en fonction notamment de la résistance des longerons 5 et de la masse des produits à transporter sur la bande transporteuse.

Les longerons 5 constituant la sole de glissement 2 reposent directement sur les traverses 9 des pieds 7 et sont solidarisés à ces traverses grâce à des moyens de fixation 6 qui seront décrits plus en détails en référence à la figure 3.

Les traverses 9 sont par ailleurs montées réglables en hauteur et en inclinaison sur les montants 8. A cet effet, ces montants 9 sont pourvus à leur extrémité coopérant avec la partie verticale 8a des montants 8 d'un ensemble 17 conçu pour pouvoir coulisser sur ceux-ci et être bloquée en position grâce à des moyens de fixation 18. Il est ainsi possible de faire varier la hauteur et l'inclinaison de la sole de glissement 2 en fonction des besoins.

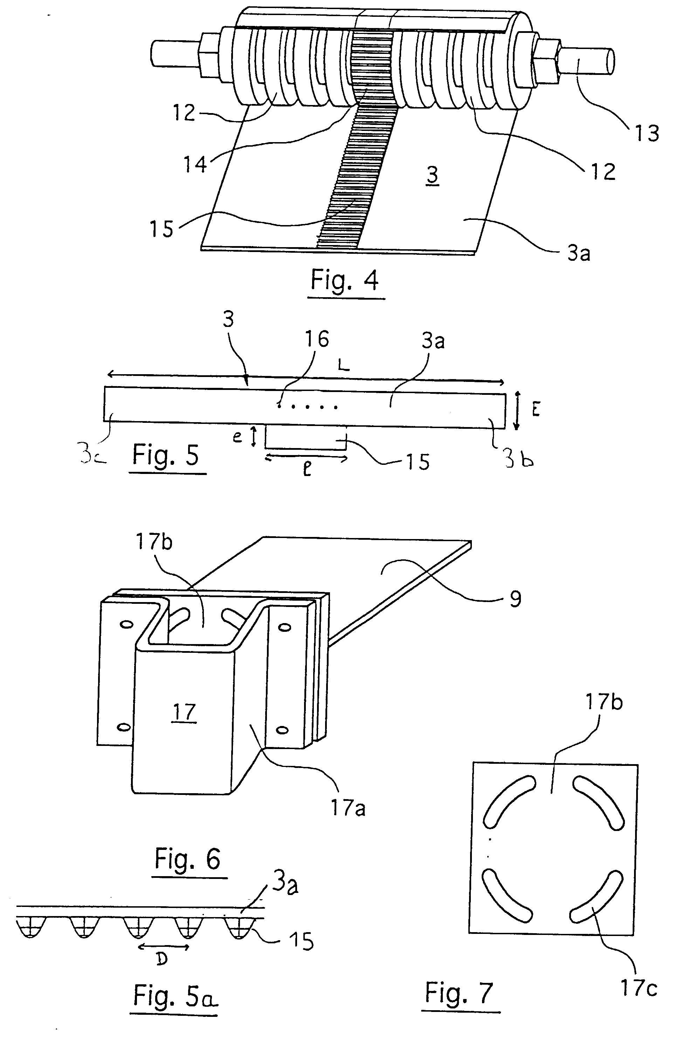

Comme on peut le voir sur la figure 6, l'ensemble 17 est constitué de deux pièces 17a et 17b destinées à coopérer entre elles autour d'un montant 8 d'un pied 7, la pièce 17b étant liée à la traverse 9. Dans le but de pouvoir faire varier l'inclinaison des traverses 9, la pièce 17b est pourvue de lumières oblongues 17c destinées à cooperer avec des trous 17d prévus dans la pièce 17a, par exemple grâce à des boulons.

En référence à la figure 3, les moyens de fixation des longerons 5 sur les traverses 9 de la structure porteuse sont constitués, pour chaque traverse 9, de trois éléments de blocage 6 de ces longerons 5, à savoir :
- un premier élément de blocage latéral 6a intégré à la traverse 9 ;
- un élément de blocage central 6c pouvant être facilement solidarisé et désolidarisé de la traverse 9 grâce à des moyens de fixation amovibles, incluant dans le cas du présent mode de réalisation une vis 19 ;
- un second élément de blocage latéral 6b pouvant également être facilement solidarisé et désolidarisé de la traverse 9 grâce à des moyens de fixation incluant dans le cas du présent mode de réalisation une vis 19a.

Afin de coopérer avec ces moyens de fixation, les longerons 5 présentent sur chacune de leur face latérale 5a une gorge 10. Lorsque les différents éléments de blocage 6a, 6b, 6c coopèrent avec ces gorges 10, les longerons 5 sont maintenus en position fixe et écartés d'un espace (d).

La conception des longerons 5 et des moyens de fixation 6 de ceux-ci sur les traverses 9 permet facilement de remplacer les longerons 5 par d'autres longerons présentant une largeur et/ou une hauteur différente et de remplacer les éléments de blocage 6b, 6c par des éléments de largeur différentes et ainsi d'obtenir un sole de glissement présentant une autre largeur ou un espace (d) différent.

Le dispositif selon la présente invention permet donc de moduler en largeur la sole de glissement pour permettre à celle-ci de s'adapter à différents types de bandes transporteuses.

Par ailleurs, la structure proposée par l'invention permet un entretien facilité. En effet, la sole étant constituée de longerons espacés entre eux, il y aura moins d'impuretés à se glisser entre la sole et la bande transporteuse et ces impuretés seront plus facile à évacuer. La sole sera également plus facile à nettoyer que les soles de l'état de la technique.

De plus, de part sa conception, le dispositif selon l'invention pourra être très facilement démonté pour être transporté.

Les longerons 5 seront préférentiellement constitués à partir de tubes inox dans lesquels ont aura réalisées les gorges 10. On pourra toutefois bien évidemment envisager d'utiliser un autre type de matériau présentant une résistance suffisamment élevée.

La longueur de la sole de glissement 2 pourra être modulée en tronçonnant les longerons à la longueur voulue.

En référence à la figure 4, les tambours représentés sont chacun constitué par un axe de rotation 13 sur lesquels sont montés des disques 12 parallèles entre eux, l'un de ces disques 12 formant un pignon denté 14. Selon une variante préférentielle, ces disques 12 sont espacés les uns des autres et peuvent être facilement démontés de l'axe 13 pour obtenir des tambours de longueurs variables. Une telle caractéristique permet de diminuer les risques de dépôt d'impuretés entre la bande transporteuse 3 et les tambours. De plus de tels tambours sont plus faciles à nettoyer que les tambours cylindriques de l'état de la technique.

En référence aux figures 4, 5 et 5a, la bande transporteuse 3 présente un profil intérieur denté 15 présentant des dents formant organe de traction. Ce profil intérieur denté 15 coopère avec la section formant pignon denté 14 des tambours, ce qui provoque son entraînement sans risque de désynchronisation entre la vitesse du moteur actionnant le tambour d'entraînement et la vitesse de défilement de la bande transporteuse 3.

En référence à la figure 5, la bande convoyeuse 3 est constituée en matière plastique extrudée (en l'occurrence du polyuréthane 92 shore A de chez BASF) et présente deux parties solidaires l'une de l'autre :
- une première partie constituant le profil denté 15 et ;
- une deuxième partie 3a pourvue de cordes de renfort 16 en Kevlar (marque déposée).

La première partie 15, d'épaisseur e et de largeur est disposée selon l'axe longitudinal central de la partie 3a, de largeur supérieure L et d'épaisseur E, ce qui permet de conférer à la bande transporteuse 3 des bords relativement souples 3b,3c, facilitant sa mise en auge éventuelle.

La figure 5a montre la distance D entre deux dents 15a ("pas" de dents) de la partie 15.

Selon une caractéristique particulièrement intéressante de l'invention, ces cordes de renfort longitudinal sont prévues au niveau de la fibre neutre de la partie 3a c'est-à-dire à peu près au milieu de son épaisseur. Un tel positionnement des cordes de renfort permet d'augmenter la résistance à la flexion sur tambour de la bande transporteuse.

La tableau ci-après donnent les caractéstiques non-limitatives, données à titre de simple exemples, de trois variantes de bandes transporteuses selon la présente invention.

| | Agrobelt 100 | Agrobelt 200 | Agrobelt 208 |
|---|---|---|---|
| Epaisseur E de la partie 3a (mm) | 2 | 3 | 3 |
| Largeur L de la partie 3a (mm) | Jusqu'à 300mm | Jusqu'à 300mm | Jusqu'à 300mm |
| Epaisseur e de la partie 15 (mm) | 3 | 5 | 4 |
| Largeur de la partie 15 (mm) | 25 | 30 | 30 |
| Pas D de dents | 10 | 12,7 | 8 |
| Nombre de cordes de renfort 16 | 8 | 8 | 8 |
| Diamètre des cordes de renfort 16 (mm) | 0,6 | 1,2 | 1,2 |

Le mode de réalisation de l'invention ici décrit n'a pas pour objet de réduire la portée de celle-ci. Il pourra donc y être apporté de nombreuses modifications sans sortir de son cadre. En particulier, on notera que les moyens de fixation des longerons sur les traverses pourront être conçus de manière différente de ceux représentés, que ces longerons pourront présenter une forme différente et que l'on pourra choisir d'utiliser plus de deux longerons.

## Revendications

1. Dispositif convoyeur à bande transporteuse, ledit dispositif présentant une structure porteuse (1) sur laquelle repose au moins une sole de glissement (2) accueillant au moins une bande transporteuse (3), ladite bande transporteuse coopérant avec au moins deux tambours (4,4a) permettant sa mise en mouvement sur ladite sole (2), caractérisé en ce que ladite sole de glissement (2) est constituée d'au moins deux longerons (5) de section essentiellement carrée ou rectangulaire disposés parallèlement à l'axe longitudinal dudit dispositif, lesdits longerons (5) étant montés écartés d'un espace (d) l'un de l'autre et coopérant avec des moyens de fixation (6) à la structure porteuse (1), lesdits tambours (4,4a) présentant au moins une section formant pignon denté (14) et ladite bande transporteuse présentant au moins un profil intérieur denté (15) de largeur inférieure audit espace (d) séparant lesdits longerons (5), ledit profilé intérieur denté (15) étant conçu pour coopérer avec ladite section formant pignon denté (14) dudit tambour.

2. Dispositif selon la revendication 1 caractérisé en ce que lesdits longerons (5) et au moins certains desdits moyens de fixation (6) étant prévus démontables et interchangeables de façon notamment à pouvoir modifier ledit espace (d) entre lesdits longerons (5).

3. Dispositif selon la revendication 2 caractérisé en ce que lesdits moyens de fixation (6) des longerons (5) auxdites traverses (9) incluent, pour chaque traverse (9), deux éléments de blocage latéral (6a,6b) et au moins un élément de blocage central (6c) desdits longerons (5), lesdits éléments de blocage latéral et de blocage central (6a,6b,6c) permettant de bloquer lesdits longerons (5) en position et de définir ledit espace (d) entre ceux-ci.

4. Dispositif selon la revendication 3 caractérisé en ce que lesdits longerons (5) sont constitués par des profilés présentant des faces latérales pourvues de moyens de coopération avec lesdits éléments de blocage (6a,6b,6c).

5. Dispositif selon l'une quelconque des revendications 1 à 4 caractérisé en ce qu'il comprend des moyens de support (11) desdits tambours (4,4a) directement fixés aux extrémités desdits longerons (5).

6. Dispositif selon l'une quelconque des revendications 1 à 5 caractérisé en ce que lesdits tambours (4,4a) sont constitués par une pluralité de disques (12) montés parallèles entre eux et espacés les uns des autres sur un axe de rotation (13).

7. Dispositif selon la revendication 6 caractérisé en ce que lesdits disques (12) constituant lesdits tambours (4,4a) peuvent être désolidarisés dudit axe de rotation (13).

8. Bande transporteuse pouvant être utilisée avec le dispositif selon l'une des revendications 1 à 7 caractérisée en ce que ladite bande transporteuse (3) présente au moins un profil intérieur denté (15) conçu pour coopérer avec la section formant pignon denté (14) d'un tambour et une autre partie (3a) destinée à être en contact avec un produit à transporter.

9. Bande transporteuse selon la revendication 8 caractérisée en ce qu'elle présente des cordes longitudinales (16) de renfort au niveau de la fibre neutre de ladite partie (3a).

10. Bande transporteuse selon l'une des revendications 8 ou 9 caractérisée en ce que ladite partie formant le profil intérieur denté (15) est prévue sur l'axe central longitudinal de ladite partie (3a) en contact avec les produits à transporter et présente une largeur inférieure (1) à celle-ci.

11. Bande transporteuse selon l'une des revendications 8 à 10 caractérisée en ce que sa face supérieure est pouvue d'un relief et/ou d' éléments entraîneurs.

12. Bande transporteuse selon l'une des revendications 8 à 11 caractérisée en ce que la face inférieure de ladite partie (3a) est pourvue d'un relief.
